(19) Europäisches Patentamt
European Patent Office
Office européen des brevets

(11) **EP 1 533 934 B1**

(12) **EUROPÄISCHE PATENTSCHRIFT**

(45) Veröffentlichungstag und Bekanntmachung des Hinweises auf die Patenterteilung:
**25.01.2012 Patentblatt 2012/04**

(51) Int Cl.:
*H04L 1/20* (2006.01)       *H04L 1/00* (2006.01)
*H04L 25/03* (2006.01)

(21) Anmeldenummer: **04024592.0**

(22) Anmeldetag: **15.10.2004**

(54) **Verfahren und Vorrichtung zur Prädiktion von in einem Empfangssignal enthaltenen Rauschen**

Method and device for predicting the noise contained in a received signal

Procédé et dispositif de prédiction du bruit contenu dans un signal reçu

(84) Benannte Vertragsstaaten:
**AT BE BG CH CY CZ DE DK EE ES FI FR GB GR HU IE IT LI LU MC NL PL PT RO SE SI SK TR**

(30) Priorität: **21.11.2003 DE 10354557**

(43) Veröffentlichungstag der Anmeldung:
**25.05.2005 Patentblatt 2005/21**

(73) Patentinhaber: **Lantiq Deutschland GmbH**
**85579 Neubiberg (DE)**

(72) Erfinder: **Träber, Mario**
**82041 Deisenhofen (DE)**

(74) Vertreter: **Banzer, Hans-Jörg et al**
**Kraus & Weisert**
**Patent- und Rechtsanwälte**
**Thomas-Wimmer-Ring 15**
**80539 München (DE)**

(56) Entgegenhaltungen:
**WO-A1-02/11378       WO-A1-02/32356**
**GB-A- 2 356 538       US-A- 5 784 415**
**US-B1- 7 117 145**

EP 1 533 934 B1

**Beschreibung**

Die vorliegende Erfindung betrifft ein Verfahren sowie eine entsprechend ausgestaltete Vorrichtung zur Prädiktion, d.h. Vorhersage oder Abschätzung, von in einem Empfangssignal enthaltenen Rauschen, wobei die vorliegende Erfindung insbesondere in digitalen Empfängern oder Transceiverbausteinen von drahtlosen oder drahtgebundenen Übertragungssystemen einsetzbar ist.

In modernen digitalen Empfängern ist die Verwendung von Faltungscodes in Verbindung mit einem Viterbi-Decodierer Stand der Technik geworden. Durch die Codierung wird eine signifikante Verbesserung des Signal-Rausch-Abstands ("Signal to Noise Ratio", SNR) erzielt. Der zur Decodierung verwendete Viterbi-Algorithmus sieht die Verwendung eines so genannten Trellis-Diagramms vor, wobei das Trellis-Diagramm zeitliche Zustandswechsel auf Basis der mit dem Empfangssignal empfangenen Symbole darstellt. Zur Decodierung der empfangenen Symbole werden so genannte Pfad-Metriken berechnet, wobei durch Auswertung der Pfad-Metriken Zuverlässigkeitsinformationen in Form von Wahrscheinlichkeiten dafür erhalten werden, ob ein empfangenes Symbol auf einer gesendeten "0" oder auf einer gesendeten "1" beruht. Hierzu werden in dem Trellis-Diagramm diejenigen Zustandsübergänge ausgewählt, welche hinsichtlich ihrer Pfad-Metriken am wahrscheinlichsten sind. Die Zuverlässigkeitsinformationen werden schließlich dadurch erhalten, dass die aufaddierten Pfad-Metriken des besten "1-Pfads" zu den aufaddierten Pfad-Metriken des besten "0-Pfads" in Beziehung gesetzt werden. Diejenigen Pfade, welche von einem Zeitpunkt zu einem nachfolgenden Zeitpunkt die wahrscheinlichsten Zustandsübergänge definieren, werden auch als "Survivor"-Pfade bezeichnet. Nachdem der Viterbi-Algorithmus an sich allgemeiner Stand der Technik ist, soll an dieser Stelle nicht weiter darauf eingegangen werden.

Ist eine derartige Trellis-codierte Modulationsumgebung ("Trellis-Coded Modulation Environment", TCM) durch stark korreliertes Rauschen ("Heavily Correlated Noise", HCN), wie beispielsweise durch eine reine Sinuswelle mit einer relativ großen Amplitude, gestört, so ist das System nicht mehr funktionsfähig, da der Faltungs- bzw. Viterbi-Decodierer die Pfad-Metriken ausgehend von einem "normalen" weißen Gauss-Rauschen ("White Gaussian Noise", WGN) ermittelt. In der Realität ist jedoch diese Voraussetzung in der Regel nicht erfüllt. Während bei geringen Rauscheinflüssen der daraus resultierende Performanceverlust tolerierbar sein kann, dekonvergiert der Viterbi-Decodierer und demzufolge der entsprechende digitale Empfänger bei Vorhandensein von stark korreliertem Rauschen.

Ein bekanntes Verfahren, den Einfluss von stark korreliertem Rauschen, wie es beispielsweise bei Frequenzinterferenzen ("Radio Frequency Interference", RFI) auftreten kann, ist der Einsatz von so genannten linearen Rauschprädiktoren, welche zukünftige Rauscheinflüsse bzw. Rauschwerte auf Grundlage von vergangenen Rauscheinflüssen bzw. Rauschwerten vorhersagen oder abschätzen. Lineare Rauschprädiktoren verwenden dabei digitale Filter, deren Koeffizienten, die so genannten "Taps", adaptiv abhängig von dem Prädiktionsfehler des Rauschprädiktors eingestellt werden. Das Ziel ist dabei, die Koeffizienten dieser digitalen Filter derart zu optimieren, dass der mittlere quadratische Prädiktionsfehler minimiert wird.

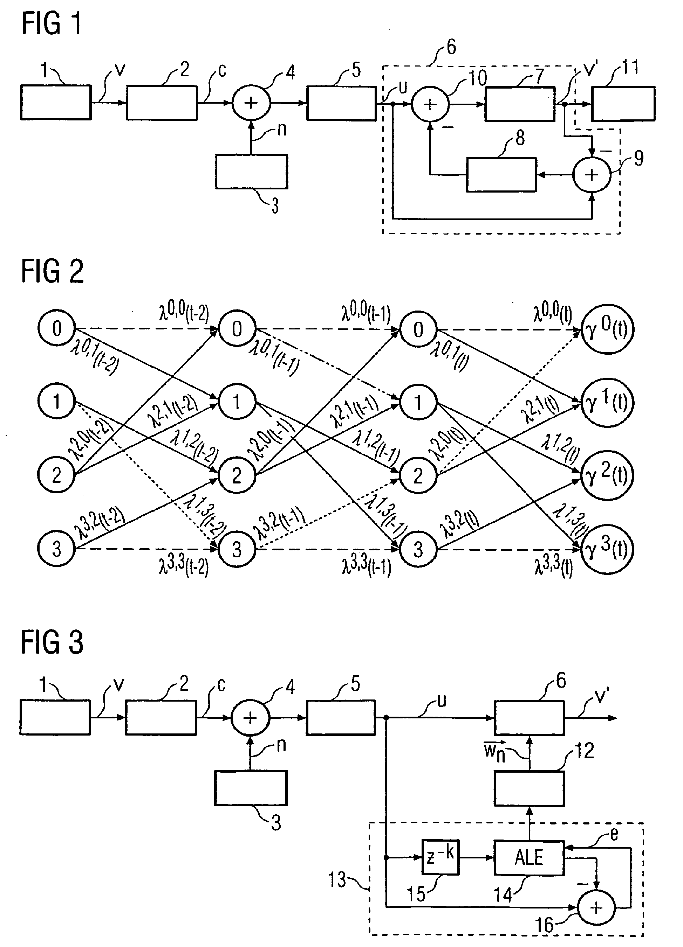

In Fig. 1 ist ein vereinfachtes Blockschaltbild eines Übertragungssystems mit einem digitalen Empfänger, in dem eine derartige entscheidungsorientierte adaptive Rauschprädiktion ("Decision Directed Adaptive Noise Prediction") zum Einsatz kommt, dargestellt.

Dabei wird davon ausgegangen, dass von einer Signalquelle 1 eines Senders ein Sendesignal v über einen Übertragungskanal 2 übertragen wird, was am Ausgang des Übertragungskanals 2 ein entsprechend verzerrtes oder gestörtes Signal c zur Folge hat und darüber hinaus am Eingang des jeweiligen Empfängers durch korreliertes Rauschen n überlagert wird, was in Fig. 1 in Form einer Rauschquelle 3 in Kombination mit einem Addierer 4 angedeutet ist. Das Empfangssignal des digitalen Empfängers wird einem Entzerrer 5 zugeführt, wobei nachfolgend davon ausgegangen wird, dass es sich hierbei um ein möglichst optimales Empfangsfilter handelt, welches aus dem Empfangssignal Intersymbolinterferenzen ("Inter-Symbol Interference", ISI) eliminiert. Das von dem Entzerrer 5 aufbereitete Empfangssignal u wird einem Entscheider 6 zugeführt, wobei gemäß Fig. 1 der Entscheider 6 einen so genannten Slicer 7 in Kombination mit einem Rauschprädiktor 8 umfasst. Der Slicer 7 trifft auf Grundlage des ihm zugeführten Empfangssignals u Symbolentscheidungen, wobei der zuvor beschriebene Viterbi-Algorithmus zur Anwendung kommt. Vom Slicer 7 wird somit eine Signalfolge v' ausgegeben, wobei mit Hilfe eines Addierers 9 die Differenz aus dem Empfangssignal u und dem Signal v' dem Rauschprädiktor 8 als Eingangssignal zugeführt wird, welcher auf Basis dieses Signals zukünftige Rauschwerte für das in dem Empfangssignal u enthaltene Rauschen berechnet, welche vor dem Slicer 7 mit Hilfe eines weiteren Addierers 10 von dem Empfangssignal u subtrahiert werden.

Der Rauschprädiktor 8 bzw. das entsprechende digitale lineare Prädiktionsfilter ist hinsichtlich der Filterkoeffizienten derart optimiert, dass der mittlere quadratische Prädiktionsfehler, welcher definiert ist durch die Differenz zwischen dem im Empfangssignal u tatsächlich enthaltenen Rauschsignal und dem von dem Rauschprädiktor 8 geschätzten Rauschsignal, minimiert wird.

Der anhand von Fig. 1 zuvor erläuterte Ansatz, den im Empfangssignal jeweils enthaltenen Rauschanteil mit Hilfe eines Rauschprädiktors abzuschätzen, liefert gute Ergebnisse, solange die korrekten Prädiktionskoeffizienten für den Rauschprädiktor bekannt sind. Nachdem jedoch das Rauschsignal in dem jeweiligen digitalen Empfänger nicht separat vorhanden und bekannt ist, sondern vielmehr additiv das eigentliche Nutzsignal überlagert, ist eine korrekte Einstellung der Filterkoeffizienten des Rauschprädiktors, welche adaptiv an das Rauschen angepasst werden müssen, problematisch. Dies wird zusätzlich dadurch beeinträchtigt, dass der Rauschprädiktor in eine codierte Umgebung eingebettet ist. Das mit diesem Ansatz verbundene Problem ist demzufolge, wie das Rauschen synthetisiert werden kann, was im Wesentlichen dem Problem entspricht, wie korrekte Entscheidungen in einer codierten Umgebung getroffen werden können.

Anstelle des zuvor beschriebenen entscheidungsorientierten Rauschprädiktionsansatzes wurde daher zur Kompensation eines Performanceverlusts in Folge von korreliertem Rauschen bei Verwendung von Faltungsdecodierern vorgeschlagen, für jeden Survivor-Pfad des Trellis-Diagramms eine separate Rauschprädiktion auf Grundlage der linearen Prädiktionstheorie durchzuführen, wobei hierin der wesentliche Unterschied zu der zuvor beschriebenen entscheidungsorientierten Rauschprädiktion zu sehen ist, da das Rauschen nicht synthetisiert wird, sondern zum Treffen einer Vorhersage Rauschschätzwerte in die Zweig- und Pfad-Metriken des Trellis-Diagramms eingehen. Die Pfad-Metriken werden dabei gemäß den Rauschschätzwerten korrigiert, ehe die nächsten Survivor-Pfade bestimmt werden. Da für die Zustände eines bestimmten Zeitpunkts des Trellis-Diagramms nicht nur die Pfad-Metriken aktualisiert werden müssen, sondern auch die zu dem jeweiligen Survivor-Pfad gehörenden Distanzen der vorhergehenden Zweige, entspricht die Anzahl der zu jedem Zeitpunkt zu aktualisierenden linearen Prädiktionsfilter der Anzahl der Zustände des Trellis-Diagramms.Es muß also also für jeden zustand im Trellis-Diagram ein Rauschwert durch lineare Filterung prädiziert werden.

Wird mit $\lambda^{s,s'}(t)$ die mit einem bestimmten Zustandsübergang von einem Zustand s zu einem Zustand s' zum Zeitpunkt t verbundene Zweig-Metrik bezeichnet, so beträgt diese für einen optimalen Viterbi-Decodierer, welcher in einer Umgebung mit weißem Gauss-Rauschen arbeitet, der so genannten Euklidischen Entfernung ("Euclidean Distance", ED) zwischen dem zu dem jeweiligen Zeitpunkt empfangenen Symbol u(t) und dem jeweiligen Zweig zugeordneten geschätzten Zymbol $e^{s,s'}(t)$ :

$$(1)$$

$$\lambda^{s,s'}(t) = \left| u(t) - e^{s,s'}(t) \right|^2 = \left| \delta^{s,s'}(t) \right|^2$$

Offensichtlich entspricht dies dem den jeweiligen Zweig zwischen dem Zustand a und dem Zustand s' zugeordneten Rauschschätzwert $\delta^{s,s'}(t)$, der tatsächlich dem Empfangssiganl überlagert sein müsste, wenn der betreffende Zustandsübergang s nach s' der richtige wäre. Diese Rauschschätzwerte von miteinander konkurrierenden Pfaden bei vorhergehenden Zeitpunkten werden verwendet, um für den Zeitpunkt t den jeweiligen Rauschwert vorherzusagen, d.h. zu prädizieren. Der Zustandsspeicher eines Rauschprädiktors für einen Trellis-Zustand entspricht somit einem Vektor derartiger Rauschschätzwerte. Der Trellis-Rauschprädiktor-Zustandsspeicher kann somit als eine zeitabhängige Distanzmatrix ("Distance Matrix"), welche die bestimmten Pfaden p durch das Trellis-Diagramm zugeordnete Rauschschätzwerte $\delta^p(t)$ enthält :

$$(2)$$

$$\Delta(t) = \begin{bmatrix} \delta^0(t-1) & \delta^0(t-2) & \cdots & \delta^0(t-N) \\ \delta^1(t-1) & \delta^1(t-2) & \cdots & \delta^1(t-N) \\ \vdots & \vdots & \ddots & \vdots \\ \delta^{2^M-1}(t-1) & \delta^{2^M-1}(t-2) & \cdots & \delta^{2^M-1}(t-N) \end{bmatrix}$$

Dabei bezeichnet N die Anzahl der insgesamt berücksichtigten Zeitpunkte und M den Gesamtspeicher des Viterbi-Codierers, so dass das Trellis-Diagramm $2^M$ Zustände und $2^M$ konkurrierende Pfade enthält.

In Fig. 2 ist beispielhaft ein Trellis-Diagramm mit vier Zuständen gezeigt, wobei die den einzelnen Zweigen bzw. Zustandsübergängen zwischen zwei aufeinander folgenden Zuständen zugeordneten Zweig-Metriken $\lambda^{s,s'}(t)$ sowie die sich daraus ergebenden Pfad-Metriken $Y^s(t)$, welche den jeweils akkumulierten Zweig-Metriken entsprechen, dargestellt sind, (s,s'=0,1,2,3). Die Distanzmatrix für das in Fig. 2 dargestellte beispielhafte Trellis-Diagramm lautet wie folgt:

( 3 )

$$\Delta(t) = \begin{bmatrix} \delta^{0,0}(t-1) & \delta^{0,0}(t-2) \\ \delta^{0,1}(t-1) & \delta^{0,0}(t-2) \\ \delta^{3,2}(t-1) & \delta^{1,3}(t-2) \\ \delta^{3,3}(t-1) & \delta^{1,3}(t-2) \end{bmatrix}$$

Die Rauschschätzwerte können durch eine einfache Matrizenmultiplikation der Distanzmatrix $\Delta(t)$ und des Rauschprädiktor-Koeffizientenvektors $\vec{w}_n$ in Vektorform wie folgt erhalten werden:

( 4 )

$$\vec{\xi}(t) = \Delta(t) \cdot \vec{w}_n = \begin{bmatrix} \xi^0(t) \\ \xi^1(t) \\ \vdots \\ \xi^{2^M-1}(t) \end{bmatrix}$$

Dieser Vektor der Rauschschätzwerte muss für jeden Zeitpunkt des Trellis-Diagramms aktualisiert werden und enthält die Rauschvorhersagen für alle konkurrierenden Pfade des jeweils vorhergehenden Zeitpunkts bzw. der jeweils vorhergehenden Zeitinstanz. Der für jeden Pfad ermittelte Rauschprädiktions- bzw. Rauschschätzwert wird zur Ermittlung der Rauschschätzwerte für die aus dem jeweiligen Zustand zum augenblicklichen Zeitpunkt wegführenden Pfade verwendet. Bei dem in Fig. 2 dargestellten Beispiel des Trellis-Diagramms mit vier Zuständen dient somit der Rauschschätzwert $\xi^0(t)$ als Grundlage für alle Zweige, welche ihren Ursprung im Zustand s=0 haben, d.h. für die Zweige (s,s') =(0,0) und (s,s')=(0,1). Die Berechnung der Pfad-Metrik ändert sich somit wie folgt:

( 5 )

$$\gamma^{s'}(t) = \min\left\langle \gamma^s(t-1) + \left| \delta^{s,s'}(t) - \xi^s(t) \right|^2 \right\rangle$$

Aus der obigen Gleichung (5) ist ersichtlich, wie die gemäß Gleichung (4) ermittelten Rauschschätzwerte in die Berechnung der korrigierten Pfad-Metriken einfließen, wobei die Voraussetzung für die Gleichung (5) ist, dass es sich bei dem Zustandsübergang vom Zustand s zum Zustand s' um einen gültigen Zweig handelt.

Zu jedem Zeitpunkt muss für jeden Trellis-Zustand eine Entscheidung zwischen zwei konkurrierenden Pfaden getroffen werden. Für beide Zweige wird ein Distanzmaß $\delta^{s,s}(t)$ ermittelt, von dem ein entsprechender Rauschschätzwert $\xi^s(t)$ subtrahiert wird. Bei dem in Fig. 2 dargestellten beispielhaften Trellis-Diagramm wird jeder Rauschschätzwert für die beiden konkurrierenden Zweige eines Zustands mit Hilfe einer linearen Filteroperation zweiter Ordnung, d.h. mit Hilfe eines linearen Filters mit zwei Taps, berechnet, wobei jeweils dieselben Tap-Gewichte verwendet werden und sich nur jeweils der Zustandsspeicher für die Berechnung der Rauschschätzwerte für jeden Zustand ändert. Der Zustandsspeicher des linearen Filters entspricht dann genau einer Zeile der Distanzmatrix. Die Matrixmultiplikation wird somit durch sequenzielle lineare Filterung realisiert. Die Distanzmatrix gemäß Gleichung (3) wird abhängig von sämtlichen Pfadentscheidungen aktualisiert, d.h. der Distanzvektor des jeweils ausgewählten Survivor-Pfads wird zur weiteren Verwendung beibehalten, während der andere Distanzvektor verworfen wird. Der übriggebliebene Distanzvektor wird mit dem dem jeweiligen Survivor-Pfad verbundenen Distanzmaß aktualisiert, während das älteste Distanzmaß in diesem Distanzvektor verworfen wird. Da von einem Zustand mindestens zwei Zustandsübergänge bzw. Zweige ausgehen, wird der Rauschschätzwert $\xi^s(t)$ eines Zustands mindestens zweimal verwendet. Es ist daher empfehlenswert, sich die Schmetterlingsstruktur ("Butterfly Structure") des Trellis-Diagramms zunutze zu machen.

Wie zuvor anhand von Gleichung (4) erläutert worden ist, können die Rauschschätzwerte, welche schließlich zur Berechung der rauschkompensierten Pfad-Metriken des jeweiligen Trellis-Diagramms dienen, unter Verwendung

des Vektors $\vec{w}_n$ ermittelt werden, welcher die Koeffizienten des Rauschprädiktors umfasst, so dass dieser Vektor nachfolgend als Rauschprädiktor-Koeffizientenvektor bezeichnet wird. Das grundsätzliche Problem bei diesem Ansatz ist, die in diesem Vektor zusammengefassten Rauschprädiktor-Koeffizienten korrekt zu bestimmen, um anschließend die Rauschschätzwerte zur Berechnung der korrigierten Pfad-Metriken gemäß den Gleichungen (4) und (5) ermitteln zu können.

Aus Druckschrift WO 02/11378 A1 ist ein Verfahren zur Prädiktion von in einem Empfangssignal enthaltenem Rauschen gemäß dem Oberbegriff nach Anspruch 1 und eine Vorrichtung zur Prädiktion von in einem Empfangssignal enthaltenem Rauschen gemäß dem Oberbegriff nach Anspruch 25 erläutert.

Des Weiteren ist in der Druckschrift WO 02/323566 A1 ein ähnliches Verfahren zur Prädiktion von in einem Empfangssignal enthaltenem Rauschen beschrieben.

Aus Druckschrift US 5784415 A ist bekannt, Metriken eines Trellis-Diagramms in Abhängigkeit von Rauschschätzwerten zu korrigieren.

Daher liegt der vorliegenden Erfindung die Aufgabe zugrunde, ein Verfahren sowie eine entsprechend ausgestaltete Vorrichtung zur Prädiktion von in einem Empfangssignal enthaltenem Rauschen bereitzustellen, womit derartige Rauschprädiktor-Koeffizienten für einen das in dem Empfangssignal enthaltene Rauschen prädizierenden Rauschprädiktor einfach und zuverläs-sig bestimmt werden können, wobei insbesondere die Erfindung auch eine Rauschprädiktion bei Vorhandensein eines stark korrelierten Rauschens ermöglichen soll.

Diese Aufgabe wird erfindungsgemäß durch ein Verfahren zur Prädiktion von in einem Empfangssignal enthaltenem Rauschen mit den Merkmalen des Anspruches 1 bzw. eine Vorrichtung zur Prädiktion von in einem Empfangssignal enthaltenem Rauschen mit den Merkmalen des Anspruches 25 gelöst. Die Unteransprüche definieren jeweils bevorzugte und vorteilhafte Ausführungsformen der vorliegenden Erfindung.

Erfindungsgemäß wird im Gegensatz zu existierenden Lösungen bei uncodierten Übertragungsverfahren kein entscheidungsrückgekoppeltes Training eines Rauschprädiktors (was bei codierten Systemen nur beim Tracking der jeweiligen Störung funktioniert) durchgeführt, sondern es wird die Statistik des Empfangssignals am Eingang des Entscheiders bzw. Decodierers des jeweiligen digitalen Empfängers genutzt, um die Rauschprädiktor-Koeffizienten bzw. Rauschschätzwerte zu ermitteln. Hierzu wird die Autokorrelationsfunktion des Empfangssignals bestimmt, wobei aus der Autokorrelationsfunktion des Empfangssignals durch geeignete Nachbearbeitung direkt die Rauschprädiktor-Koeffizienten als Lösung der Wiener-Hopf-Gleichung ermittelt wird. Anhand der somit bestimmten Rauschprädiktor-Koeffizienten und den daraus abgeleiteten Rauschschätzwerten werden dann unter Verwendung der zuvor beschriebenen Gleichungen (4) und (5) rauschkompensierte Pfad-Metriken im Entscheider berechnet, um auch bei Vorhandensein von stark korreliertem Rauschen korrekte Entscheidungen bezüglich des Werts des jeweils empfangenen Symbols zu treffen.

Zur Bestimmung der Rauschprädiktor-Koeffizienten wird insbesondere aus der Autokorrelationsfunktion des Empfangssignals die Autokorrelationsfunktion des darin enthaltenen Rauschsignals ermittelt, wobei dies im Prinzip dadurch erfolgt, dass die Autokorrelationsfunktion des Nutzsignals von der Autokorrelationsfunktion des Empfangssignals subtrahiert wird. Die Autokorrelationsfunktion des Nutzsignals entspricht dabei für $\tau=0$ der Signalleistung des empfangenen Nutzsignals, so dass zur Berechnung der Autokorrelationsfunktion des Rauschsignals lediglich die Signalleistung des Nutzsignals von der Autokorrelationsfunktion des Empfangssignals für den Zeitwert bzw. "Lag" $\tau=0$ subtrahiert werden muss. Für $\tau\neq0$ entspricht die Autokorrelationsfunktion des Rauschsignals der Autokorrelationsfunktion des Empfangssignals. Die Sendeleistung kann einfach abhängig von dem jeweils gewählten Modulationsverfahren ermittelt werden und ist in der Regel eine Konstante, da die Skalierung des Nutzsignals am Eingang eines (TCM)-Faltungsdekodierers festliegt.

Die Autokorrelationsfunktion des Empfangssignals kann direkt durch Verwendung eines entsprechend ausgestalteten digitalen Autokorrelationsfilters aus dem Empfangssignal ermittelt werden.

Alternativ ist auch möglich, dass die Autokorrelationsfunktion des Empfangssignals unter Verwendung eines digitalen Prädiktionsfilters gewonnen wird, wobei auf Grundlage des Empfangssignals von dem Filter erzeugte Prädiktionswerte von dem Empfangssignal subtrahiert werden, um abhängig von dem daraus resultierenden Differenzsignal, welches dem Prädiktionsfehler dieses digitalen Filters entspricht, die Filterkoeffizienten des Filters einzustellen. Im stabilen Zustand dieser Regelschleife enthalten die Filterkoeffizienten des Filters die gesuchte Korrelationsinformation des Empfangssignals, so dass aus den Filterkoeffizienten die Autokorrelationsfunktion des Empfangssignals abgeleitet werden kann, wobei dies insbesondere unter Verwendung der Wiener-Hopf-Gleichung, welche mit Hilfe des "reversiven" Levinson-Durbin-Algorithmus gelöst wird, erfolgen kann. Ein derartiges Prädiktionsfilter ist beispielsweise ein ALE-Filter ("Adaptive Line Enhancer").

Aus der Autokorrelationsfunktion des Rauschsignals können die Rauschprädiktor-Koeffizienten durch Lösung der Wiener-Hopf-Gleichung bestimmt werden, wobei diese Gleichung effizient wiederum mit dem Levinson-Durbin-Algorithmus aufgrund der Toeplitz-Struktur der Matrizen gelöst werden kann.

In der Regel ist das empfangene Nutzsignal unkorreliert, sodass das beschriebene Verfahren im Allgemeinen immer funktioniert. Es gibt jedoch ein Übertragungsverfahren, welches einen Sonderfall darstellt, bei der das Nutzsignal erst nach einer nichtlinearen Operation unkorreliert ist. Dieses Übertragungsverfahren wurde von Tomlinson und Harashima eingeführt und transformiert in seinem Prinzip das entscheidungsrückgekoppelte Entzerrerfilter in den Sender. Dadurch wird eine Vorverzerrung des Sendesignals erwirkt, welche durch den Übertragungskanal wieder entzerrt wird. Die Impulsantwort (nach dem Entscheider-Tap) des Kanals entspricht hierbei der Impulsantwort des Vorverzerrer-Filters. Um den Vorverzerrer stabil zu halten, wird eine nichtlineare Operation (das Modulo) verwendet. Dadurch ist der Ausgang der Vorverzerrers unkorreliert und weist eine Gleichverteilung auf. Wird nun dieses Signal mit der Kanalimpulsantwort gefaltet, so ergibt sich natürlich eine Korrelation des empfangenen Nutzsignals basierend auf den Kanalimpulskoeffizienten. Für die eigentliche Weiterverabeitung des empfangenen Nutzsignals ist das irrelevant, da zuvor eine inverse nichtlineare Operation (wiederum das Modulo) angewandt wird. In dem Signal nach dieser Modulo-Operation ist die Rauschkorrelation nicht mehr direkt messbar. Deswegen kann das erfindungsgemäße Verfahren nur auf dem Signal vor dieser Modulo-Operation angewandt werden. Hier ist jedoch das Nutzsignal selbst korreliert und somit muss die Nachbearbeitung der Autokorrelationsfunktion des Empfangssignals zur Ermittlung Autokorrelationsfunktion des Rauschsignals angepasst werden. Hierfür gibt es zwei Verfahren.

Die erste Möglichkeit besteht darin, die gesamte Autokorrelationsfunktion' des empfangenen Nutzsignals von der Autokorrelationsfunktion des Empfangsignals zu subtrahieren. Das ist möglich, da die Autokorrelationsfunktion des Nutzsignals a-priori durch die Koeffizienten im Vorverzerrer bestimmt werden können, z.B. durch Selbstfaltung. Dieses Verfahren funktioniert uneingeschränkt solange der betragsmäßige Unterschied der Autokorrelationsfunktion des Rauschsignals und der Autokorrelation des empfangenen Nutzsignals nicht zu groß wird.

Ein zweites Verfahren eignet sich besonders, wenn als stark korreliertes Rauschen ein oder mehrere schmalbandige Störer (im Sonderfall Sinus-Störer) vorliegen. Um eine derartig starke Korrelation zu berücksichtigen, kann vorteilhafterweise insbesondere die Autokorrelationsfunktion des Empfangssignals lediglich in einem Lag-Bereich ausgewertet werden, welcher im Wesentlichen vollständig die Rauschinformation des jeweiligen Rauschsignals beinhaltet, wobei diese Rauschinformation sowohl eine Amplitudeninformation als auch eine Frequenzinformation des Rauschsignals umfasst. Das ist möglich, da insbesondere Sinus-Störer eine Autokorrelationsfunktion aufweisen, welche einem Kosinus derselben Frequenz mit einer definierten Amplitude entspricht - also periodisch ist und nicht abklingt. Nachdem die Autokorrelationsfunktion des Empfangssignals für niedrige Lag-Werte relativ stark durch die Korrelation des Empfangsdatensignals überlagert ist, diese jedoch mit zunehmenden Lags abnimmt, empfiehlt es sich, die Autokorrelationsfunktion des Empfangssignals erst für die Lags $\tau \geq$ einem bestimmten Grenzwert, auszuwerten. Durch dieses Verfahren wird die Rauschsignal-Korrelationsinformation von der des empfangenen Nutzsignals separiert. Wird jedoch die Autokorrelationsfunktion des schmalbandigen Störers (z.B. Sinus-Störer) bei höheren Lags abgetastet, so erhält man ein Phasen-Offset für die periodische Autokorrelationsfunktion.

Zur Berücksichtigung dieses Phasenversatzes kann vorteilhafterweise der ausgewertete Bereich der Autokorrelationsfunktion des Empfangssignals nochmals einer Autokorrelationsfunktion-Operation unterzogen werden, was einer Faltung des ausgewerteten Bereichs der Autokorrelationsfunktion des Empfangssignals entspricht. Nach anschließender Skalierung der daraus resultierenden Autokorrelationsfunktion können die Werte der Autokorrelationsfunktion wie beschrieben zur Ermittlung der Rauschprädiktor-Koeffizienten verwendet werden.

Die vorliegende Erfindung eignet sich zur zuverlässigen Rauschprädiktion auch bei Vorhandensein von stark korreliertem Rauschen beispielsweise in xDSL-Empfängern, ohne jedoch auf diesen bevorzugten Anwendungsbereich beschränkt zu sein. Vielmehr kann die Erfindung in allen digitalen Empfängern von drahtgebundenen oder drahtlosen Übertragungssystemen eingesetzt werden, bei denen unter Verwendung von Rauschprädiktor-Koeffizienten Rauschschätzwerte für einen Entscheider bestimmt werden, so dass der Entscheider auf Grundlage dieser Rauschschätzwerte eine korrekte Entscheidung bezüglich der jeweils empfangenen Symbole treffen kann.

Das erfindungsgemäße Verfahren basiert auf der Autokorrelationsfunktion des Empfangssignals, welche durch geeignete Nachbearbeitung in die Autokorrelationsfunktion des Rauschsignals konvertiert werden kann. Diese wird dann durch Lösung der Wiener-Hopf-Gleichung, vorzugsweise mit dem bekannten Levinson-Durbin Algorithmus, zur Bestimmung der Prädiktorfilter-Koeffizienten verwendet. Die Bestimmung der Autokorrelationsfuntion des Empfangsignals kann hierbei, wie erfindungsgemäß dargestellt, indirekt durch adaptieren eines ALE-Filters und nachträgliche Berechnung der Autokorrelationsfunktion, vorzugsweise mit dem bekannten (inversen) Levinson-Durbin-Algorithmus, erfolgen, oder durch direkte Bestimmung der Autokorrelationsfunktion des Empfangssignals mit einem Korrelator nach dem Stand der Technik.

Die vorliegende Erfindung wird nachfolgend näher unter Bezugnahme auf die beigefügte Zeichnung erläutert.

Fig. 1 zeigt ein Blockschaltbild eines digitalen Empfängers gemäß dem Stand der Technik mit entscheidungsorientierter a-daptiver Rauschprädiktion,

Fig. 2 zeigt ein beispielhaftes Trellis-Diagramm zur Erläuterung der Bestimmung von Pfad-Metriken unter Verwendung von Rauschschätzwerten, wie es auch erfindungsgemäß vorgesehen ist,

Fig. 3 zeigt ein Blockschaltbild eines digitalen Empfängers gemäß einem Ausführungsbeispiel der vorliegenden Erfindung mit einem ALE-Filter zur Bestimmung der Autokorrelationsfunktion eines Empfangssignals,

Fig. 4 zeigt ein Blockschaltbild eines digitalen Empfängers gemäß einem weiteren Ausführungsbeispiel der vorliegenden Erfindung mit einem digitalen Autokorrelationsfilter zur unmittelbaren Bestimmung der Autokorrelationsfunktion eines Empfangssignals aus dem Empfangssignal selbst, und

Fig. 5 zeigt eine Darstellung von Autokorrelationsfunktionen zur Erläuterung einer gemäß einem bevorzugten Ausführungsbeispiel erfindungsgemäß vorgeschlagenen Nachbearbeitung der Autokorrelationsfunktion eines Empfangssignals zur Bestimmung von Rauschprädiktor-Koeffizienten.

Wie bereits zuvor beschrieben worden ist, ist die Verwendung einer entscheidungsorientierten adaptiven Rauschprädiktion, wie sie anhand von Fig. 1 erläutert worden ist, bei stark korreliertem Rauschen problematisch. Das Hauptproblem hierbei ist, dass falsche Entscheidungen aufgrund des stark korrelierten Rauschens zu falschen Prädiktionsfehlern und damit zu einer Divergenz des linearen Prädiktionsfilters führen.

Im Rahmen der vorliegenden Erfindung wird daher vorgeschlagen, unmittelbar die Statistik des Empfangssignals auszuwerten, um einen Satz von linearen Rauschprädiktor-Koeffizienten zu ermitteln. Insbesondere wird im Rahmen der vorliegenden Erfindung vorgeschlagen, die Autokorrelationsfunktion des Empfangssignals zu bestimmen, um daraus die Autokorrelation des Rauschsignals zu ermitteln, aus der die Rauschprädiktor-Koeffizienten berechnet weden können, wobei zur Bestimmung der Autokorrelationsfunktion des Empfangssignals sowohl der Autokorrelationsfunktion des Rauschsignals unterschiedliche Ausführungsbeispiele möglich sind.

In Fig. 3 ist ein digitales Übertragungssystem ähnlich zu dem in Fig. 1 dargestellten Übertragungssystem gezeigt, wobei auf der Empfängerseite eine Vorrichtung zur Bestimmung der Autokorrelationsfunktion des Empfangssignals gemäß einem ersten Ausführungsbeispiel vorgesehen ist.

Das in Fig. 3 gezeigte Übertragungssystem umfasst einen Sender 1 mit einer Signalquelle, welche ein Sendesignal v erzeugt und über einen drahtgebundenen oder drahtlosen Übertragungskanal 2 an einen Empfänger überträgt, wobei am Eingang des Empfängers das über den Übertragungskanal 2 übertragene und demzufolge verzerrte Signal c mit Rauschen n überlagert wird, was in Fig. 3 schematisch in Form einer Rauschquelle 3 und einen Addierer 4 angedeutet ist. Das mit dem Rauschsignal n überlagerte Empfangssignal wird einem Entzerrer 5 zugeführt, dessen Aufgabe primär die Beseitigung von Intersymbolinterferenzen ist, wobei das entzerrte Empfangssignal u, welches immer noch einen Rauschanteil beinhaltet, einem Entscheider 6, in dem beispielsweise ein Viterbi-Decodierer integriert ist, zugeführt wird. Der Entscheider 6 wertet das entzerrte Empfangssignal u aus, um für jedes empfangene Symbol eine möglichst korrekte Entscheidung zu treffen, ob das jeweilige Symbol auf einer gesendeten "0" oder einer gesendeten "1" beruht. Vom Entscheider 6 wird demzufolge im Idealfall das korrekt decodierte Sendesignal v' ausgegeben.

Der Entscheider 6 trifft seine Entscheidungen wie zuvor anhand von Fig. 2 erläutert unter Anwendung des Viterbi-Algorithmus, wobei insbesondere die im Zusammenhang mit dem jeweiligen Trellis-Diagramm ausgewerteten Pfad- bzw. Zweig-Metriken in Übereinstimmung mit den obigen Gleichungen (4) und (5) um Rauschschätzwerte korrigiert werden. Um diese Korrektur vorzunehmen, benötigt der Entscheider 6, wie aus Gleichung (4) ersichtlich ist, den Vektor $\vec{w}_n$, welcher die Koeffizienten zur Ermöglichung der Rauschprädiktion umfasst, welche nachfolgend als Rauschprädiktor-Koeffizienten bezeichnet werden.

Bei dem in Fig. 3 dargestellten Ausführungsbeispiel ist eine Einrichtung 12 vorgesehen, welche auf nachfolgend noch näher beschriebene Art und Weise die Autokorrelationsfunktion des Empfangssignals u ermittelt und daraus die Rauschprädiktor-Koeffizienten ableitet und dem Entscheider 6 zuführt, so dass dieser auf Basis dieser Rauschprädiktor-Koeffizienten bzw. des entsprechenden Rauschprädiktionsvektors die Pfad- bzw. Zweig-Metriken in Übereinstimmung mit den Gleichungen (4) und (5) aktualisieren kann, um eine korrekte Entscheidung zwischen ""1"- und "0"-Symbolen trotz Vorhandensein eines möglicherweise stark korrelierten Rauschens zu treffen.

Bei dem in Fig. 3 dargestellten Ausführungsbeispiel ist das entzerrte Empfangssignal u nicht nur dem Entscheider 6, sondern unmittelbar auch einer Filteranordnung 13 zugeführt, welche als adaptive "Line Enhancer"-Filteranordnung (ALE) bezeichnet werden kann. Im Wesentlichen umfasst diese Filteranordnung 13 ein digitales ALE-Filter 14, bei dem es sich im Prinzip um ein Prädiktionsfehlerfilter handelt.

Die Grundlagen von ALE-Filtern können beispielsweise James R. Zeidler, "Performance Analysis of LMS Adaptive Prediction Filters", Proceedings of IEEE, vol. 28, no. 12, December 1990, entnommen werden, so dass an dieser Stelle ergänzend auf diese Veröffentlichung verwiesen wird. Nachfolgend sollen lediglich die wesentlichen Aspekte, welche für die vorliegende Erfindung von Bedeutung sind, wiedergegeben werden.

Wie aus Fig. 3 ersichtlich ist, ist das Empfangssignal u über ein Verzögerungsglied 15 dem ALE-Filter 14 zugeführt. Darüber hinaus ist das Empfangssignal u einem Addierer 16 zugeführt, welcher das von dem ALE-Filter 14 erzeugte Ausgangssignal davon subtrahiert. Das ALE-Filter 14 erzeugt als Ausgangssignal Prädiktionswerte auf Basis des Eingangssignals der ALE-Filteranordnung 13, wobei die Tap-Gewichte $\vec{w}_e$ der ALE-Filteranordnung 13 abhängig von den Tap-Gewichten $\vec{w}_f$ des im Vorwärtspfad angeordneten digitalen ALE-Filters 14 wie folgt dargestellt werden

können:

$$(6)$$

$$\bar{w}_e = \begin{bmatrix} 1 \\ -\bar{w}_f \end{bmatrix}$$

Die Gleichung (6) gibt wieder, dass die von dem ALE-Filter 14 auf Basis des Eingangssignals der ALE-Filteranordnung 13 erzeugten Prädiktionswerte von dem Eingangssignal selbst subtrahiert werden, so dass das Ausgangssignal des Addierers 16 dem Prädiktionsfehler entspricht. Die Prädiktionsfehlerleistung $P_M$ einer derartigen ALE-Filteranordnung 13 der Ordnung M kann wie folgt ausgedrückt werden:

$$(7)$$

$$\begin{bmatrix} P_M \\ \bar{0} \end{bmatrix} = \begin{bmatrix} r(o) & \bar{r}^T \\ \bar{r} & R \end{bmatrix} \begin{bmatrix} 1 \\ -\bar{w}_f \end{bmatrix}$$

Dabei bezeichnet $\bar{r}$ den Autokorrelationsvektor mit

$$(8)$$

$$\bar{r} = \begin{bmatrix} r(1) \\ r(2) \\ \vdots \\ r(M) \end{bmatrix}$$

R bezeichnet die Autokorrelationsmatrix, welche stets eine Toeplitz-Struktur aufweist:

$$(9)$$

$$R = \begin{bmatrix} r(0) & r(1) & \dots & r(M-1) \\ r(1) & r(0) & \cdots & r(M-2) \\ \vdots & \vdots & \ddots & \vdots \\ r(M-1) & r(M-2) & \cdots & r(0) \end{bmatrix}$$

$\bar{w}_f$ ist schließlich der Vektor mit den linearen Prädiktions-Koeffizienten bzw. Prädiktions-Tap-Gewichten des ALE-Filters 14:

$$(10)$$

$$\vec{w}_f = \begin{bmatrix} w_1 \\ w_2 \\ \vdots \\ w_M \end{bmatrix}$$

Die Koeffizienten des ALE-Filters 14 werden abhängig von dem Prädiktionsfehler e unter Verwendung des LMS-Algorithmus kontinuierlich aktualisiert, um somit den Prädiktionsfehler e zu minimieren. Wie in der zuvor beschriebenen Veröffentlichung erläutert ist, ist im stabilen Zustand, d.h. wenn der Prädiktionsfehler e minimiert ist, das Prädiktionsfehlersignal e nicht mit der Prädiktionsleistung $P_M$ korreliert. Die Koeffizienten des ALE-Filters 14 enthalten somit im stabilen Zustand die vollständige Korrelationsinformation des Eingangssignals, d.h. gemäß Fig. 3 des entzerrten Empfangssignals u, d.h. aus den Koeffizienten des ALE-Filters 14 kann im stabilen Zustand der ALE-Filteranordnung 13 die Autokorrelationsfunktion des Empfangssignals u abgeleitet werden.

Bekannterweise können die optimalen Prädiktions-Koeffizienten bzw. Prädiktion-Tap-Gewichte des ALE-Filters 14 durch Lösung der Wiener-Hopf-Gleichung wie folgt aus der Autokorrelationsmatrix R und dem Autokorrelationsvektor $\vec{r}$ ermittelt werden:

$$(11)$$

$$R\vec{w}_0 = \vec{r}$$

Dabei bezeichnet $\vec{w}_0$ den Vektor mit den optimalen Prädiktions-Koeffizienten bzw. Tap-Gewichten des ALE-Filters 14. Da die Autokorrelationsmatrix und der Autokorrelationsvektor beide ein und dieselbe Information beinhalten, kann aus dem Vektor $\vec{w}_0$ die exakte Autokorrelationsfunktion des Eingangssignals berechnet werden, wobei die folgende Matrixgleichung zu lösen ist:

$$(12)$$

$$\begin{bmatrix} r(0) & r(1) & \cdots & r(M-1) \\ r(1) & r(0) & \cdots & r(M-2) \\ \vdots & \vdots & \ddots & \vdots \\ r(M-1) & r(M-2) & \cdots & r(0) \end{bmatrix} \begin{bmatrix} w_1 \\ w_2 \\ \vdots \\ w_M \end{bmatrix} - \begin{bmatrix} r(1) \\ r(2) \\ \vdots \\ r(M) \end{bmatrix} = 0$$

An dieser Stelle soll nicht zu sehr darauf eingegangen werden, wie die obige Gleichung (12) gelöst werden kann. Im Rahmen der vorliegenden Erfindung ist lediglich von Bedeutung, dass eine Lösung der Gleichung (12) existiert, welche der Autokorrelationsfunktion des Empfangssignals u entspricht. Es kann an dieser Stelle ergänzend darauf hingewiesen werden, dass sich ein Gleichungssystem dieser Art vorzugsweise und effizient mit Hilfe der bekannten reversiven Levinson-Durbin-Reversion lösen lässt.

Die in Fig. 3 gezeigte Einrichtung 12 ermittelt aus den Koeffizienten des ALE-Filters 14 nicht nur die Autokorrelationsfunktion des Empfangssignals u, vielmehr ist es auch die Aufgabe der Einrichtung 12, aus der Autokorrelationsfunktion des Empfangssignals die Autokorrelationsinformation des darin enthaltenen Rauschsignals n zu extrahieren, um auf Basis dieser Information schließlich die Rauschprädiktor-Koeffizienten zu ermitteln und dem Entscheider zuzuleiten, welcher schließlich auf Grundlage dieser Rauschprädiktor-Koeffizienten die Rauschschätzwerte zur Aktualisierung der Pfad- und Zweig-Metriken ermitteln kann. Die Rauschprädiktor-Koeffizienten werden anschließend vorteilhafterweise adaptiv gehalten bzw. angepasst.

Diesbezüglich kann gezeigt werden, dass sich die Autokorrelationsfunktion $r_u(\tau)$ des Empfangssignals aus der Summe der Autokorrelationsfunktionen des Rauschsignals $r_n(\tau)$ und des Sendesignals $r_v(\tau)$ zusammensetzt. Zur Er-

mittlung der Autokorrelationsfunktion $r_n(\tau)$ des Rauschanteils muss demzufolge lediglich die Autokorrelationsfunktion $r_v(\tau)$ des Sendesignals von der bereits bekannten Autokorrelationsfunktion $r_v(\tau)$ des Empfangssignals subtrahiert werden. Hierzu ist lediglich die a-Priori-Kenntnis von $r_v(\tau)$ erforderlich.

Aus verschiedenen Gründen umfassen nahezu alle Kommunikationssysteme Scramblingblöcke zur Dekorrelation der jeweiligen Daten, wobei die Scramblingblöcke im Wesentlichen für den Decodieralgorithmus erforderlich sind. Dies bedeutet jedoch, dass zwischen aufeinander folgenden Datensymbolen keinerlei Datenkorrelation besteht, so dass für die Autokorrelationsfunktion des Sendesignals v gilt:

$$(13)$$

$$r_v(\tau) = \begin{cases} P_v = \lim_{n \to \infty} \dfrac{1}{N} \sum_{n=0}^{N-1} |v(t)|^2 & \tau = 0 \\ 0 & \tau \neq 0 \end{cases}$$

Dabei bezeichnet $P_v$ die Sendeleistung des Sendesignals v. Mit anderen Worten bedeutet dies, dass lediglich die Empfangssignalleistung des Nutzsignals vom Lag 0 der Autokorrelationsfunktion $r_u(\tau)$ des Empfangssignals subtrahiert werden muss, um die gesuchte Autokorrelationsfunktion $r_n(\tau)$ des Rauschanteils wie folgt zu erhalten:

$$(14)$$

$$r_n(\tau) = \begin{cases} r_u(0) - P_v = P_u - P_v & \tau = 0 \\ r_u(\tau) & \tau \neq 0 \end{cases}$$

In Gleichung (14) bezeichnet $P_u$ die Leistung des Empfangssignals u, welches durch $P_u = r_u(0)$ definiert ist.

Selbstverständlich ist es möglich, die Empfangssignalleistung des Nutzsignals $P_v$ zu messen. Dies ist jedoch nicht erforderlich, da in der Regel eine a-Priori-Kenntnis über die Empfangssignalleistung des Nutzsignals $P_v$ vorliegt. Handelt es sich beispielsweise bei dem Sendesignal v um ein gemäß einer M-stufigen Pulsamplitudenmodulation moduliertes Signal, so ist die Empfangssignalleistung des Nutzsignals wie folgt definiert:

$$(15)$$

$$P_v = \frac{1}{3} \frac{M^2 - 1}{M^2}$$

In diesem Fall muss lediglich ein konstanter Wert von $r_u(0)$ subtrahiert werden, um die Autokorrelationsfunktion $r_n(\tau)$ des Rauschanteils zu erhalten.

Generell ist es möglich, die Empfangsleistung des Nutzsignals unabhängig von der jeweils verwendeten Modulationsart zu bestimmen.

Sobald die Autokorrelationsfunktion $r_n(\tau)$ des Rauschanteils bekannt ist, kann mit Hilfe der Wiener-Hopf-Gleichung der Vektor mit den optimalen Rauschprädiktor-Koeffizienten für den Entscheider 6 durch Anwendung des Levinson-Durbin-Algorithmus bestimmt werden:

$$(16)$$

$$R_n \vec{w}_n = \vec{r}_n$$

Dabei bezeichnet $R_n$ die entsprechende Autokorrelationsmatrix, und $\vec{w}_n$ den Rauschprädiktor-Koeffizienten-

vektor, welcher die Rauschprädiktor-Koeffizienten für den Entscheider 6 beinhaltet, so dass der Entscheider 6 auf Basis dieser Rauschprädiktor-Koeffizienten in Übereinstimmung mit Gleichung (4) Rauschschätzwerte zur Korrektur der Pfad-Metriken in Übereinstimmung mit Gleichung (5) ermitteln kann. Der Vollständigkeit halber sei darauf hingewiesen, dass die Wiener-Hopf-Gleichung (15) im Prinzip durch alle aus der linearen Gleichungstheorie bekannten Algorithmen gelöst werden kann. Aufgrund der Toeplitz-Struktur der Autokorrelationsmatrix bietet sich jedoch die iterative Levinson-Durbin-Rekursion an, welche beispielsweise hinsichtlich seiner Einfachheit einer Cholesky-Faktorisierung vorzuziehen ist.

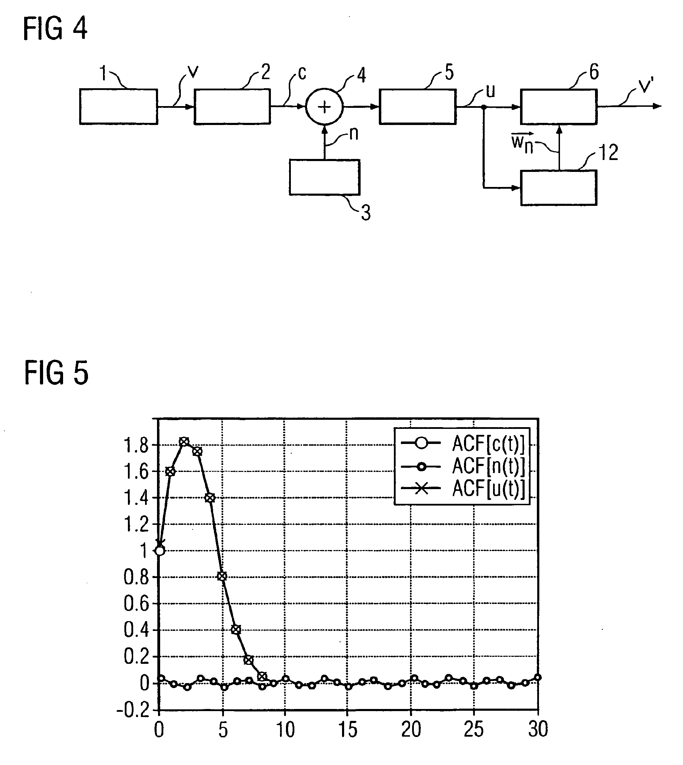

Fig. 4 zeigt ein weiteres Ausführungsbeispiel zur Ermittlung der Autokorrelationsfunktion des Empfangssignals u, wobei die gemäß Fig. 4 vorgesehene Einrichtung 12 ein Filter umfasst, welches als Autokorrelationsfilter bezeichnet werden kann und unmittelbar die Autokorrelationsfunktion aus dem ihr zugeführten Empfangssignal u berechnet. Der mit diesem Ansatz verbundene Vorteil besteht darin, dass die Qualität der Bestimmung der Autokorrelationsfunktion $r_u$ ($\tau$) verbessert werden kann, wobei darüber hinaus der Aufwand im Vergleich zu Fig. 3 reduziert ist.

Bei dem in Fig. 4 dargestellten Ausführungsbeispiel unterscheidet sich die Einrichtung 12 von der in Fig. 3 dargestellten Einrichtung 12 lediglich in der Art und Weise, wie die Autokorrelationsfunktion des Empfangssignals bestimmt wird. Die Bestimmung der Autokorrelationsfunktion $r_n(\tau)$ des Rauschsignals sowie des Rauschprädiktor-Koeffizientenvektors $\vec{w}_n$ kann analog zu Fig. 3 erfolgen.

Die zuvor beschriebenen Algorithmen liefern perfekte Ergebnisse, falls das Datensignal nicht korreliert ist. Es sind jedoch Anwendungen und Betriebsbedingungen denkbar, bei denen diese Voraussetzung nicht erfüllt ist. Ein Beispiel hierfür ist die Verwendung einer Tomlinson-Harashima-Vorcodierung, wie sie beispielsweise in M. Tomlinson, "New Automatic Equalizer Employing Modulo Arithmetic", Electronic Letters, vol. 7, no. 576, pp. 138-139, March 1971 beschrieben ist, worauf an dieser Stelle zur Erläuterung der Grundlagen der Tomlinson-Harashima-Vorcodierung vollinhaltlich Bezug genommen wird. Aufgrund dieser Vorcodierung ist das Datensignal stark korreliert, wobei diese Korrelation die Autokorrelationsfunktion stark überlagert.

Die Korrelationsinformation ist vollständig in den Koeffizienten des Tomlinson-Harashima-Vorcodierers enthalten und somit dem Empfänger bekannt. Es wäre somit grundsätzlich möglich, einfach die Autokorrelationsfunktion des Datensignals zu berechnen und von jedem Lag der ermittelten bzw. geschätzten Autokorrelationsfunktion zu subtrahieren. Dies ist zwar grundsätzlich möglich, wobei jedoch in der Praxis aufgrund des damit verbundenen Aufwands und der damit verbundenen Fehleranfälligkeit weitere Verbesserungen notwendig sind, um auch bei einem Szenario der zuvor beschriebenen Art eine korrekte Information über die Autokorrelationsfunktion des Empfangssignals bzw. des darin enthaltenen Rauschsignals als Grundlage für die Ermittlung der Rauschprädiktor-Koeffizienten zu erhalten, wobei eine Möglichkeit existiert, auch bei einem von der Datensignalkorrelation dominierten Empfangssignal eine korrekte Information über die Autokorrelationsfunktion des Empfangssignals bzw. des darin enthaltenen Rauschsignals zu extrahieren.

Wie an sich bekannt ist, ist die Autokorrelationsfunktion einer reinen Sinuswelle x(t), welche nachfolgend kurz als Beispiel für einen Schmalbandstörer betrachtet wird, wie folgt definiert:

$$(17)$$

$$x(t) = a \cdot \sin(\omega t + \phi) \quad \rightarrow \quad r_x(\tau) = \frac{a^2}{2}\cos(\omega\tau)$$

Dabei bezeichnet $r_x(\tau)$ die Autokorrelationsfunktion der Sinuswelle x(t), und a bezeichnet die Amplitude sowie $\phi$ die Phase der Sinuswelle x(t). Aus (17) ist ersichtlich, dass die Autokorrelationsfunktion einer Sinus-/Kosinuswelle wiederum eine Kosinuswelle mit der Amplitude $a^2/2$ ist, wobei die Autokorrelationsfunktion dieselbe Frequenz wie das zugrunde liegende Signal, jedoch keinen Phasenversatz aufweist. Die Autokorrelationsfunktion ist demzufolge phasenunabhängig und beinhaltet die Korrelationsinformation aufgrund der periodischen Eigenschaften der Autokorrelationsfunktion auch in Bereichen beliebig großer Lags. Es ist demzufolge grundsätzlich möglich, die für die Bestimmung der Rauschprädiktor-Koeffizienten maßgebliche Information aus Lags der Autokorrelationsfunktion des Empfangssignals abzuleiten, welche nicht durch die relativ starke Datensignalkorrelation beeinträchtigt sind.

Dies soll nachfolgend näher unter Bezugnahme auf Fig. 5 erläutert werden, wobei in Fig. 5 beispielhaft der Verlauf der Autokorrelationsfunktion des nicht mit Rauschen überlagerten Empfangssignals c(t) mit weißen Kreisen dargestellt ist, während darüber hinaus in Fig. 5 die Autokorrelationsfunktion des Rauschsignals n(t) mit schwarzen Kreisen und die Autokorrelationsfunktion des Empfangssignals u(t) mit Kreuzen dargestellt ist. Aus Fig. 5 ist insbesondere ersichtlich, dass die in der Autokorrelationsfunktion des Rauschsignals n(t) enthaltene Rauschinformation in der Autokorrelationsfunktion des Empfangssignals deutlich durch die Korrelation des Daten- bzw. Nutzsignals im Bereich niedriger Lags überlagert ist, d.h. im Bereich $0 \leq \tau \leq 10$ ist die Autokorrelationsfunktion des Empfangssignals deutlich durch die Daten- bzw. Nutzsignalkorrelation dominiert. Darüber hinaus ist aus Fig. 5 auch ersichtlich, dass für Lags $\tau \geq 10$ der

Einfluss der Datensignalkorrelation nahezu verschwindet, da dann der Verlauf der Autokorrelationsfunktion des Empfangssignals im Wesentlichen dem Verlauf der Autokorrelationsfunktion des Rauschsignals entspricht. Werden die für die Ermittlung der Rauschprädiktor-Koeffizienten ausgewerteten Lags der Autokorrelationsfunktion des Empfangssignals ausreichend groß gewählt, so enthalten diese vollständig die Amplituden- und Frequenzinformation des Rauschsignals. Zur Bestimmung der Rauschprädiktor-Koeffizienten kann somit ein Bereich der Autokorrelationsfunktion des Empfangssignals ausgewertet werden, welcher nicht mehr von der Datensignalkorrelation dominiert bzw. beeinflusst wird, wobei dies beispielsweise bei dem in Fig. 5 gezeigten Verlauf der Autokorrelationsfunktion für den Bereich der Autokorrelationsfunktion des Empfangssignals zwischen den Lags 15 und 25 zutrifft.

Das einzige hierbei noch zu lösende Problem ist, dass per Definition die Autokorrelationsfunktion einer Sinuswelle eine Kosinuswelle mit Phase 0 beim Lag 0, d.h. bei $\tau=0$, ist (vgl. Gleichung 17). Demzufolge muss bei Auswertung eines Bereichs der Autokorrelationsfunktion des Empfangssignals, welcher nicht bei $\tau=0$ beginnt, der daraus resultierende Phasenversatz berücksichtigt werden.

Eine einfache Möglichkeit zur Lösung dieses Phasenproblems ist es, den jeweils ausgewerteten Bereich der Autokorrelationsfunktion des Empfangssignals, beispielsweise zwischen den Lags 15 und 25, als ein separates Signal zu betrachten und von diesem Bereich der Autokorrelationsfunktion erneut die Autokorrelationsfunktion zu berechnen. Das Ergebnis ist eine Kosinuswelle mit derselben Frequenz und eine Amplitude $b^2/2$, wobei jedoch die dadurch erhaltene überarbeitete Autokorrelationsfunktion $r'_x(\tau)$ keine Phaseninformation mehr beinhaltet, d.h. der Phasenoffset entspricht 0, was dem gewünschten Ergebnis entspricht, da daraus wie beschrieben die Autokorrelationsfunktion des Rauschsignals abgeleitet werden kann, wobei lediglich die Autokorrelationsfunktion $r'_x(\tau)$ der Autokorrelationsfunktion $r_x(\tau)$ mit einem geeigneten Faktor F zur Amplitudenkorrektur skaliert werden muss. Der Skalierungsfaktor F kann dabei wie folgt bestimmt werden:

$$(18)$$

$$r_x(\tau) = \frac{a^2}{2}\cos(\omega\tau) \; \rightarrow \; r'_x(\tau) = \frac{b^2}{2}\cos(\omega\tau)$$

$$F\frac{b^2}{2} \stackrel{!}{=} \frac{a^2}{2} \; \rightarrow F = \frac{a^2}{b^2} = \frac{a^2}{2r'_x(0)} \qquad b = \frac{a^2}{2} \Rightarrow a = \sqrt{2b} = \sqrt{2\sqrt{2r'_x(0)}}$$

$$F = \frac{\left(\sqrt{2\sqrt{2r'_x(0)}}\right)^2}{2r'_x(0)} = 2\frac{\sqrt{2r'_x(0)}}{2r'_x(0)} = \frac{2}{\sqrt{2r'_x(0)}} = \sqrt{\frac{2}{r'_x(0)}}$$

Wird der zuvor beschriebene Sachverhalt auf den vorliegenden Fall der Autokorrelationsfunktion $r_u(\tau)$ des Empfangssignals u(t) übertragen, so bedeutet dies, dass lediglich ein interessierender Bereich dieser Autokorrelationsfunktion zur weiteren Auswertung ausgewählt werden muss, wobei anschließend von diesem interessierenden Bereich der Autokorrelationsfunktion $r_u(\tau)$ nochmals die Autokorrelationsfunktion $r'_u(\tau)$ wie beschrieben bestimmt und anschließend mit dem Skalierungsfaktor F in Übereinstimmung mit Gleichung (18) zur Amplitudenkorrektur multipliziert wird. Dabei kann die Bestimmung der Autokorrelationsfunktion des interessierenden Bereichs der Autokorrelationsfunktion $r_u(\tau)$ durch Faltung des interessierenden Bereichs von $r_u(\tau)$ ermittelt werden. Aus der Autokorrelationsfunktion $r'_u(\tau)$ kann dann anschließend wie zuvor beschrieben die Autokorrelationsfunktion $r_n(\tau)$ des Rauschsignals bestimmt werden, um wiederum auf Basis derselben die Rauschprädiktor-Koeffizienten bzw. den entsprechen Rauschprädiktor-Koeffizientenvektor $\vec{w}_n$ für den Entscheider 6 zu ermitteln.

**Patentansprüche**

1.  Verfahren zur Prädiktion von in einem Empfangssignal enthaltenem Rauschen, umfassend die Schritte

    a) Ermitteln der Autokorrelationsfunktion des Empfangssignals (u), und
    b) Bestimmen von Rauschschätzwerten für das in dem Empfangssignal (u) enthaltene Rauschen (n) auf Grundlage der im Schritt a) ermittelten Autokorrelationsfunktion des Empfangssignals, wobei aus der Autokorrelationsfunktion des Empfangssignals (u) die Autokorrelationsfunktion des in dem Empfangssignal (u) enthaltenen Rauschens (n) ermittelt wird, um aus der Autokorrelationsfunktion des Rauschens (n) die Rauschschätzwerte zu bestimmen,

**dadurch gekennzeichnet,**
**dass** die Autokorrelationsfunktion des Rauschens (n) durch Subtraktion der Autokorrelationsfunktion eines Empfangs-Nutzsignals, auf dem das Empfangssignal (u) beruht, von der Autokorrelationsfunktion des Empfangssignals (u) ermittelt wird,
wobei die Autokorrelationsfunktion des Empfangs-Nutzsignals wie folgt bestimmt wird:

$$r_v(\tau) = \begin{cases} P_v & \tau = 0 \\ 0 & \tau \neq 0 \end{cases},$$

wobei $r_v(\tau)$ die Autokorrelationsfunktion des Empfangs-Nutzsignals für einen Zeitwert $\tau$ und $P_v$ die Empfangssignalleistung des Empfangs-Nutzsignals bezeichnet.

2. Verfahren nach Anspruch 1,
**dadurch gekennzeichnet,**
**dass** über einen Wert eines mit dem Empfangssignal (u) empfangenen Symbols unter Verwendung eines Trellis-Diagramms entschieden wird, wobei in Abhängigkeit von den Rauschschätzwerten Metriken des Trellis-Diagramms korrigiert werden.

3. Verfahren nach Anspruch 1 oder 2,
**dadurch gekennzeichnet,**
**dass** das Empfangssignal (u) vor Bestimmung der Autokorrelationsfunktion entzerrt wird.

4. Verfahren nach einem der vorhergehenden Ansprüche, **dadurch gekennzeichnet,**
**dass** das Empfangssignal (u) einem adaptiven Filter (14) zugeführt wird, welcher auf Grundlage des Empfangssignals (u) Prädiktionswerte für das Empfangssignal erzeugt, wobei abhängig von einem Prädiktionsfehler des adaptiven Filters (14) Filterkoeffizienten des adaptiven Filters (14) eingestellt werden, und
**dass** die Autokorrelationsfunktion des Empfangssignals (u) aus den Filterkoeffizienten des adaptiven Filters (14) ermittelt wird, wenn das adaptive Filter (14) einen stabilen Zustand erreicht hat.

5. Verfahren nach Anspruch 4,
**dadurch gekennzeichnet,**
**dass** die Filterkoeffizienten des adaptiven Filters (14) in Abhängigkeit von dem Prädiktionsfehler e unter Anwendung eines LMS-Algorithmus eingestellt werden.

6. Verfahren nach Anspruch 4 oder 5,
**dadurch gekennzeichnet,**
**dass** das adaptive Filter (14) ein Adaptive Line Enhancer-Filter ist.

7. Verfahren nach einem der Ansprüche 4-6,
**dadurch gekennzeichnet,**
**dass** die Autokorrelationsfunktion des Empfangssignals (u) aus den Filterkoeffizienten des adaptiven Filters (14) gemäß folgender Gleichung ermittelt wird:

$$R\vec{w}_0 = \vec{r}\,,$$

wobei $\vec{w}_0$ einen Vektor mit den Filterkoeffizienten des adaptiven Filters (14) im stabilen Zustand des Filters (14), $\vec{r}$ den Autokorrelationsvektor des Empfangssignals (u) und R die Autokorrelationsmatrix des Empfangssignals (u) auf Grundlage des Autokorrelationsvektors bezeichnet.

8. Verfahren nach Anspruch 7,
**dadurch gekennzeichnet,**

**dass** die Autokorrelationsfunktion des Empfangssignals (u) aus der angegebenen Gleichung unter Verwendung des reversiven Levinson-Durbin-Algorithmus ermittelt wird.

9. Verfahren nach einem der Ansprüche 1-3,
   **dadurch gekennzeichnet,**
   **dass** die Autokorrelationsfunktion des Empfangssignals (u) unmittelbar aus dem Empfangssignal selbst unter Verwendung eines Autokorrelationsfilters (12) ermittelt wird.

10. Verfahren nach einem der vorhergehenden Ansprüche,
    **dadurch gekennzeichnet,**
    **dass** das Empfangssignal (u) pulsamplitudenmoduliert ist, wobei zur Ermittlung der Autokorrelationsfunktion des Empfangs-Nutzsignals die Empfangssignalleistung $P_v$ des Empfangs-Nutzsignals abhängig von einer Anzahl von Stufen der Pulsamplitudenmodulation wie folgt bestimmt wird:

$$P_v = \frac{1}{3} \frac{M^2 - 1}{M^2},$$

wobei M die Anzahl der Stufen der Pulsamplitudenmodulation bezeichnet.

11. Verfahren nach einem der vorhergehenden Ansprüche,
    **dadurch gekennzeichnet,**
    **dass** das Empfangssignal moduliert ist, und
    **dass** zur Ermittlung der Autokorrelationsfunktion des Empfangs-Nutzsignals die Empfangssignalleistung des Empfangs-Nutzsignals abhängig von der Modulationsart bestimmt wird.

12. Verfahren nach einem der vorhergehenden Ansprüche,
    **dadurch gekennzeichnet,**
    **dass** die Autokorrelationsfunktion des Rauschens (n) wie folgt ermittelt wird:

$$r_n(\tau) = \begin{cases} r_u(0) - P_v & \tau = 0 \\ r_u(\tau) & \tau \neq 0 \end{cases},$$

wobei $r_n(\tau)$ die Autokorrelationsfunktion des Rauschens (n), $r_u(\tau)$ die Autokorrelationsfunktion des Empfangssignals (u) und $P_v$ die Empfangssignalleistung des Empfangs-Nutzsignals bezeichnet.

13. Verfahren nach einem der vorhergehenden Ansprüche,
    **dadurch gekennzeichnet,**
    **dass** aus der Autokorrelationsfunktion des Rauschens Rauschprädiktor-Koeffizienten für einen Rauschprädiktor zur Bestimmung der Rauschschätzwerte über folgende Gleichung ermittelt werden:

$$R_n \vec{w}_n = \vec{r}_n,$$

wobei $\vec{r}_n$ den Autokorrelationsvektor des Rauschens (n), $R_n$ die Autokorrelationsmatrix des Rauschens (n) auf Grundlage des Autokorrelationsvektors und $\vec{w}_n$ einen Vektor mit den Rauschprädiktor-Koeffizienten bezeichnet.

14. Verfahren nach Anspruch 13,
    **dadurch gekennzeichnet,**
    **dass** die Rauschprädiktor-Koeffizienten über die angegebene Gleichung unter Verwendung des reversiven Levinson-Durbin-Algorithmus ermittelt werden.

15. Verfahren nach Anspruch 13 oder 14,
    **dadurch gekennzeichnet,**

**dass** nach der Ermittlung der Rauschprädiktor-Koeffizienten diese nachfolgend adaptiv eingestellt werden.

16. Verfahren nach einem der vorhergehenden Ansprüche,
**dadurch gekennzeichnet,**
**dass** die Autokorrelationsfunktion des Empfangssignals (u) vor Bestimmung der Rauschschätzwerte aus der Autokorrelationsfunktion des Empfangssignals (u) zur Berücksichtigung einer Korrelation des Empfangssignals (u) durch ein in dem Empfangssignal (u) enthaltenes Nutzsignal aufbereitet wird, wobei aus der aufbereiteten Autokorrelationsfunktion des Empfangssignals (u) die Rauschschätzwerte bestimmt werden.

17. Verfahren nach Anspruch 16,
**dadurch gekennzeichnet,**
**dass** die Aufbereitung der Autokorrelationsfunktion des Empfangssignals (u) zur Berücksichtigung einer Tomlinson-Harashima-Vorcodierung, welcher ein dem Empfangssignal (u) zugrunde liegendes Sendesignal (v) unterzogen wurde, durchgeführt wird.

18. Verfahren nach Anspruch 16 oder 17,
**dadurch gekennzeichnet,**
**dass** die Aufbereitung der Autokorrelationsfunktion des Empfangssignals (u) derart erfolgt, dass zur Bestimmung der Rauschschätzwerte lediglich ein Bereich der Autokorrelationsfunktion des Empfangssignals (u) ausgewertet wird, welcher im Wesentlichen vollständig eine Rauschinformation über das Rauschen (n) beinhaltet.

19. Verfahren nach Anspruch 18,
**dadurch gekennzeichnet,**
**dass** der auszuwertende Bereich der Autokorrelationsfunktion des Empfangssignals (u) derart gewählt wird, dass er im Wesentlichen vollständig eine Amplitudeninformation und eine Frequenzinformation des Rauschens (n) beinhaltet.

20. Verfahren nach Anspruch 18 oder 19,
**dadurch gekennzeichnet,**
**dass** der auszuwertende Bereich der Autokorrelationsfunktion $r_u(\tau)$ des Empfangssignals (u) einem Bereich der Autokorrelationsfunktion des Empfangssignals (u) ab einem bestimmten Grenzwert von $\tau$ entspricht.

21. Verfahren nach einem der Ansprüche 18-20,
**dadurch gekennzeichnet,**
**dass** bei der Auswertung der Autokorrelationsfunktion des Empfangssignals (u) ein Phasenversatz in der Autokorrelationsfunktion des Empfangssignals (u) in Folge der Auswertung lediglich des Bereichs der Autokorrelationsfunktion des Empfangssignals (u) korrigiert wird.

22. Verfahren nach einem der Ansprüche 18-21,
**dadurch gekennzeichnet,**
**dass** vor Bestimmung der Rauschschätzwerte aus dem ausgewerteten Bereich der Autokorrelationsfunktion des Empfangssignals (u) nochmals die Autokorrelationsfunktion des ausgewerteten Bereichs der Autokorrelationsfunktion des Empfangssignals (u) gebildet wird, um auf Grundlage dieser nochmals gebildeten Autokorrelationsfunktion die Rauschschätzwerte zu bestimmen.

23. Verfahren nach Anspruch 22,
**dadurch gekennzeichnet,**
**dass** die Autokorrelationsfunktion des ausgewerteten Bereichs der Autokorrelationsfunktion des Empfangssignals (u) **dadurch** gebildet wird, dass eine Faltung des ausgewerteten Bereichs der Autokorrelationsfunktion des Empfangssignals (u) durchgeführt wird.

24. Verfahren nach Anspruch 22 oder 23,
**dadurch gekennzeichnet,**
**dass** vor Bestimmung der Rauschschätzwerte die Autokorrelationsfunktion des ausgewerteten Bereichs der Autokorrelationsfunktion des Empfangssignals (u) mit einem Skalierungsfaktor skaliert wird.

25. Vorrichtung zur Prädiktion von in einem Empfangssignal enthaltenem Rauschen,
mit einer Autokorrelationsfunktionsermittlungseinrichtung (12) zur Ermittlung der Autokorrelationsfunktion des Empfangssignals (u), und

mit einer Rauschprädiktoreinrichtung (6, 12) zur Bestimmung von Rauschschätzwerten für das in dem Empfangssignal (u) enthaltene Rauschen (n) aus der Autokorrelationsfunktion des Empfangssignals (u), wobei die Autokorrelationsfunktionsermittlungseinrichtung (12) derart ausgestaltet ist, dass sie aus der Autokorrelationsfunktion des Empfangssignals (u) die Autokorrelationsfunktion des in dem Empfangssignal (u) enthaltenen Rauschens (m) ermittelt, und wobei die Rauschprädiktorseinrichtung (6, 12) derart ausgestaltet ist, dass sie die Rauschschätzwerte aus der Autokorrelationsfunktion des Rauschens (n) bestimmt,

**dadurch gekennzeichnet,**

**dass** die Autokorrelationsfunktionsermittlungseinrichtung (12) derart ausgestaltet ist, dass sie die Autokorrelationsfunktion des Rauschens (n) durch Subtraktion der Autokorrelationsfunktion eines Empfangs-Nutzsignals, auf dem das Empfangssignal (u) beruht, von der Autokorrelationsfunktion des Empfangssignals (u) ermittelt und dabei die Autokorrelationsfunktion des Empfangs-Nutzsignals wie folgt bestimmt:

$$r_v(\tau) = \begin{cases} P_v & \tau = 0 \\ 0 & \tau \neq 0 \end{cases},$$

wobei $r_v(\tau)$ die Autokorrelationsfunktion des Empfangs-Nutzsignals für einen Zeitwert $\tau$ und $P_v$ die Empfangssignal-leistung des Empfangs-Nutzsignals bezeichnet.

**26.** Vorrichtung nach Anspruch 25,
**dadurch gekennzeichnet,**
**dass** die Vorrichtung ein adaptives Filter (14) umfasst, dem das Empfangssignal (u) zugeführt ist, wobei das adaptive Filter (14) zur Erzeugung von Prädiktionswerten für das Empfangssignal auf Grundlage des Empfangssignals (u) ausgestaltet ist, und wobei das adaptive Filter (14) zur adaptiven Einstellung seiner Filterkoeffizienten in Abhängigkeit von einem Prädiktionsfehler des adaptiven Filters (14) ausgestaltet ist, und
**dass** die Autokorrelationsermittlungseinrichtung (12) derart ausgestaltet ist, dass sie die Autokorrelationsfunktion des Empfangssignals (u) aus den Filterkoeffizienten des adaptiven Filters (14) im Falle eines stabilen Zustands des adaptiven Filters (14) ableitet.

**27.** Vorrichtung nach Anspruch 25,
**dadurch gekennzeichnet,**
**dass** die Autokorrelationsfunktionsermittlungseinrichtung (12) ein Autokorrelationsfilter zur Ermittlung der Autokorrelationsfunktion des Empfangssignals (u) unmittelbar aus dem Empfangssignal (u) umfasst.

**28.** Vorrichtung nach einem der Ansprüche 25-27,
**dadurch gekennzeichnet,**
**dass** die Vorrichtung zur Durchführung des Verfahrens nach einem der Ansprüche 1-24 ausgestaltet ist.

**29.** Digitaler Empfänger zum Empfangen eines über einen Übertragungskanal (2) übertragenen Empfangssignals (u) mit einer Vorrichtung nach einem der Ansprüche 25-28 zur Prädiktion von in dem Empfangssignal (u) enthaltenem Rauschen (n).

## Claims

**1.** Method for predicting noise contained in a received signal,
comprising the steps of

a) determining the autocorrelation function of the received signal (u), and
b) determining noise estimates for the noise (n) contained in the received signal (u) on the basis of the autocorrelation function of the received signal determined in step a), the autocorrelation function of the noise (n) contained in the received signal (u) being determined from the autocorrelation function of the received signal (u) in order to determine the noise estimates from the autocorrelation function of the noise (n),

**characterized in that**

the autocorrelation function of the noise (n) is determined by subtracting the autocorrelation function of a received useful signal, on which the received signal (u) is based, from the autocorrelation function of the received signal (u), the autocorrelation function of the received useful signal being determined as follows:

$$r_v(\tau) = \begin{cases} P_v, & \tau = 0 \\ 0 & \tau \neq 0 \end{cases},$$

where $r_v(\tau)$ denotes the autocorrelation function of the received useful signal for a time value $\tau$ and $P_v$ denotes the received signal power of the received useful signal.

**2.** Method according to Claim 1,
   **characterized in that**
   a decision is made on a value of a symbol received with the received signal (u) using a trellis diagram, metrics of the trellis diagram being corrected on the basis of the noise estimates.

**3.** Method according to Claim 1 or 2,
   **characterized in that**
   the received signal (u) is equalized before determining the autocorrelation function.

**4.** Method according to one of the preceding claims,
   **characterized in that**
   the received signal (u) is supplied to an adaptive filter (14) which generates prediction values for the received signal on the basis of the received signal (u), filter coefficients of the adaptive filter (14) being set on the basis of a prediction error of the adaptive filter (14), and
   **in that** the autocorrelation function of the received signal (u) is determined from the filter coefficients of the adaptive filter (14) when the adaptive filter (14) has reached a stable state.

**5.** Method according to Claim 4,
   **characterized in that**
   the filter coefficients of the adaptive filter (14) are set on the basis of the prediction error e using an LMS algorithm.

**6.** Method according to Claim 4 or 5,
   **characterized in that**
   the adaptive filter (14) is an adaptive line enhancer filter.

**7.** Method according to one of Claims 4-6,
   **characterized in that**
   the autocorrelation function of the received signal (u) is determined from the filter coefficients of the adaptive filter (14) according to the following equation:

$$R\vec{w}_0 = \vec{r},$$

where $\vec{w}_0$ denotes a vector with the filter coefficients of the adaptive filter (14) in the stable state of the filter (14), $\vec{r}$ denotes the autocorrelation vector of the received signal (u) and R denotes the autocorrelation matrix of the received signal (u) on the basis of the autocorrelation vector.

**8.** Method according to Claim 7,
   **characterized in that**
   the autocorrelation function of the received signal (u) is determined from the stated equation using the reverse Levinson-Durbin algorithm.

**9.** Method according to one of Claims 1-3,
   **characterized in that**

the autocorrelation function of the received signal (u) is directly determined from the received signal itself using an autocorrelation filter (12).

10. Method according to one of the preceding claims,
**characterized in that**
the received signal (u) is pulse-amplitude-modulated, in which case, in order to determine the autocorrelation function of the received useful signal, the received signal power $P_v$ of the received useful signal is determined, on the basis of a number of pulse amplitude modulation stages, as follows:

$$P_v = \frac{1}{3}\frac{M^2-1}{M^2} ,$$

where M denotes the number of pulse amplitude modulation stages.

11. Method according to one of the preceding claims,
**characterized in that**
the received signal is modulated, and
**in that**, in order to determine the autocorrelation function of the received useful signal, the received signal power of the received useful signal is determined on the basis of the type of modulation.

12. Method according to one of the preceding claims,
**characterized in that**
the autocorrelation function of the noise (n) is determined as follows:

$$r_n(\tau) = \begin{cases} r_u(0) - P_v & \tau = 0 \\ r_u(\tau) & \tau \neq 0 \end{cases} ,$$

where $r_n(\tau)$ denotes the autocorrelation function of the noise (n), $r_u(\tau)$ denotes the autocorrelation function of the received signal (u) and $P_v$ denotes the received signal power of the received useful signal.

13. Method according to one of the preceding claims,
**characterized in that**
noise predictor coefficients for a noise predictor for determining the noise estimates are determined from the autocorrelation function of the noise using the following equation:

$$R_n \vec{w}_n = \vec{r}_n ,$$

where $\vec{r}_n$ denotes the autocorrelation vector of the noise (n), $R_n$ denotes the autocorrelation matrix of the noise (n) on the basis of the autocorrelation vector and $\vec{w}_n$ denotes a vector with the noise predictor coefficients.

14. Method according to Claim 13,
**characterized in that**
the noise predictor coefficients are determined via the stated equation using the reverse Levinson-Durbin algorithm.

15. Method according to Claim 13 or 14,
**characterized in that**,
after the noise predictor coefficients have been determined, the latter are then adaptively set.

16. Method according to one of the preceding claims,
**characterized in that**
the autocorrelation function of the received signal (u) is conditioned by means of a useful signal contained in the received signal (u), before the noise estimates are determined from the autocorrelation function of the received signal (u), in order to take into account a correlation of the received signal (u), the noise estimates being determined from the conditioned autocorrelation function of the received signal (u).

17. Method according to Claim 16,
**characterized in that**
the autocorrelation function of the received signal (u) is conditioned in order to take into account Tomlinson-Harashima precoding, to which a transmit signal (v) on which the received signal (u) is based was subjected.

18. Method according to Claim 16 or 17,
**characterized in that**
the autocorrelation function of the received signal (u) is conditioned in such a manner that, in order to determine the noise estimates, only a region of the autocorrelation function of the received signal (u) is evaluated, which region substantially completely contains an item of noise information relating to the noise (n).

19. Method according to Claim 18,
**characterized in that**
**that** region of the autocorrelation function of the received signal (u) which is to be evaluated is selected in such a manner that it substantially completely contains an item of amplitude information and an item of frequency information relating to the noise (n).

20. Method according to Claim 18 or 19,
**characterized in that**
**that** region of the autocorrelation function $r_u(\tau)$ of the received signal (u) which is to be evaluated corresponds to a region of the autocorrelation function of the received signal (u) as of a particular limit value of $\tau$.

21. Method according to one of Claims 18-20,
**characterized in that**
a phase offset in the autocorrelation function of the received signal (u) as a result of evaluating only the region of the autocorrelation function of the received signal (u) is corrected when evaluating the autocorrelation function of the received signal (u).

22. Method according to one of Claims 18-21,
**characterized in that**,
before determining the noise estimates from the evaluated region of the autocorrelation function of the received signal (u), the autocorrelation function of the evaluated region of the autocorrelation function of the received signal (u) is formed again in order to determine the noise estimates on the basis of this autocorrelation function which is formed again.

23. Method according to Claim 22,
**characterized in that**
the autocorrelation function of the evaluated region of the autocorrelation function of the received signal (u) is formed by convoluting the evaluated region of the autocorrelation function of the received signal (u).

24. Method according to Claim 22 or 23,
**characterized in that**,
before determining the noise estimates, the autocorrelation function of the evaluated region of the autocorrelation function of the received signal (u) is scaled using a scaling factor.

25. Apparatus for predicting noise contained in a received signal,
having an autocorrelation function determination device (12) for determining the autocorrelation function of the received signal (u), and
having a noise predictor device (6, 12) for determining noise estimates for the noise (n) contained in the received signal (u) from the autocorrelation function of the received signal (u),
the autocorrelation function determination device (12) being configured in such a manner that it determines the autocorrelation function of the noise (n) contained in the received signal (u) from the autocorrelation function of the received signal (u), and the noise predictor device (6, 12) being configured in such a manner that it determines the noise estimates from the autocorrelation function of the noise (n),
**characterized in that**

the autocorrelation function determination device (12) is configured in such a manner that it determines the autocorrelation function of the noise (n) by subtracting the autocorrelation function of a received useful signal, on which the received signal (u) is based, from the autocorrelation function of the received signal (u) and, in the process, determines the autocorrelation function of the received useful signal as follows:

$$r_v(\tau) = \begin{cases} P_v, & \tau = 0 \\ 0 & \tau \neq 0 \end{cases},$$

where $r_v(\tau)$ denotes the autocorrelation function of the received useful signal for a time value $\tau$ and $P_v$ denotes the received signal power of the received useful signal.

**26.** Apparatus according to Claim 25,
**characterized in that**
the apparatus comprises an adaptive filter (14) to which the received signal (u) is supplied, the adaptive filter (14) being configured to generate prediction values for the received signal on the basis of the received signal (u), and the adaptive filter (14) being configured to adaptively set its filter coefficients on the basis of a prediction error of the adaptive filter (14), and
**in that** the autocorrelation function determination device (12) is configured in such a manner that it derives the autocorrelation function of the received signal (u) from the filter coefficients of the adaptive filter (14) in the case of a stable state of the adaptive filter (14).

**27.** Apparatus according to Claim 25,
**characterized in that**
the autocorrelation function determination device (12) comprises an autocorrelation filter for directly determining the autocorrelation function of the received signal (u) from the received signal (u).

**28.** Apparatus according to one of Claims 25-27,
**characterized in that**
the apparatus is configured to carry out the method according to one of Claims 1-24.

**29.** Digital receiver for receiving a received signal (u) transmitted via a transmission channel (2), having an apparatus according to one of Claims 25-28 for predicting noise (n) contained in the received signal (u).

**Revendications**

**1.** Procédé de prédiction du bruit contenu dans un signal de réception,
comprenant les stades dans lesquels

a) on détermine la fonction d'autocorrélation du signal (u) de réception, et
b) on détermine des valeurs d'estimation du bruit (n) contenues dans le signal (u) de réception sur la base de la fonction d'autocorrélation du signal de réception déterminée au stade a), la fonction d'autocorrélation du bruit (n) contenue dans le signal (u) de réception étant déterminée à partir de la fonction d'autocorrélation du signal (u) de réception, pour déterminer les valeurs d'estimation du bruit à partir de la fonction d'autocorrélation du bruit (n), **caractérisé**

**en ce que** l'on détermine la fonction d'autocorrélation du bruit (n) en soustrayant la fonction d'autocorrélation d'un signal utile de réception, sur lequel repose le signal (u) de réception de la fonction d'autocorrélation du signal (u) de réception,
la fonction d'autocorrélation du signal utile de réception étant déterminée de la manière suivante :

$$r_v(\tau) = \begin{cases} P_v & \tau = 0 \\ 0 & \tau \neq 0 \end{cases}$$

dans laquelle $r_v(\tau)$ désigne la fonction d'autocorrélation du signal utile de réception pour une valeur de temps $\tau$ et $P_v$ la puissance du signal utile de réception.

2. Procédé suivant la revendication 1, **caractérisé en ce qu'**on décide, en utilisant un diagramme en treillis, de la valeur d'un symbole reçu avec le signal (u) de réception, des métriques du diagramme en treillis étant corrigées en fonction des valeurs d'estimation du bruit.

3. Procédé suivant la revendication 1 ou 2, **caractérisé en ce que** l'on corrige le signal (u) de réception avant la détermination de la fonction d'autocorrélation.

4. Procédé suivant l'une des revendications précédentes,
   **caractérisé**
   **en ce que** l'on envoie le signal (u) de réception à un filtre (14) adaptatif, qui produit, sur la base du signal (u) de réception, des valeurs de prédiction du signal de réception, des coefficients de filtrage du filtre (14) adaptatif étant réglés en fonction d'une erreur de prédiction du filtre (14) adaptatif et
   **en ce que** l'on détermine la fonction d'autocorrélation du signal (u) de réception à partir des coefficients de filtrage du filtre (14) adaptatif, lorsque le filtre (14) adaptatif a atteint un état stable.

5. Procédé suivant la revendication 4,
   **caractérisé**
   **en ce que** l'on règle les coefficients de filtrage du filtre (14) adaptatif en fonction de l'erreur e de prédiction en utilisant un algorithme LMS.

6. Procédé suivant la revendication 4 ou 5,
   **caractérisé**
   **en ce que** le filtre (14) adaptatif est un filtre adaptatif line enhancer.

7. Procédé suivant l'une des revendications 4 à 6,
   **caractérisé**
   **en ce que** l'on détermine la fonction d'autocorrélation du signal (u) de réception à partir des coefficients de filtrage du filtre (14) adaptatif par l'équation suivante :

$$R\vec{w}_0 = \vec{r}$$

dans laquelle $\vec{w}_0$ désigne un vecteur ayant les coefficients de filtrage du filtre (14) adaptatif dans l'état stable du filtre (14), $\vec{r}$ désigne le vecteur d'autocorrélation du signal (u) de réception et R désigne la matrice d'autocorrélation du signal (u) de réception sur la base du vecteur d'autocorrélation.

8. Procédé suivant la revendication 7,
   **caractérisé**
   **en ce que** l'on détermine la fonction d'autocorrélation du signal (u) de réception à partir de l'équation indiquée en utilisant l'algorithme inverse de Levinson Durbin.

9. Procédé suivant l'une des revendications 1 à 3,
   **caractérisé**
   **en ce que** l'on détermine la fonction d'autocorrélation du signal (u) de réception directement à partir du signal de réception lui-même en utilisant un filtre (2) d'autocorrélation.

10. Procédé suivant l'une des revendications précédentes,
    **caractérisé**
    **en ce que** l'on module en amplitude d'impulsion le signal (u) de réception, dans lequel, pour la détermination de la fonction d'autocorrélation du signal utile de réception, on détermine la puissance P du signal utile de réception en fonction d'un nombre de paliers de la modulation en amplitude d'impulsion de la manière suivante :

$$P_v = \frac{1}{3} \frac{M^2 - 1}{M^2}$$

dans laquelle M désigne le nombre des paliers de la modulation en amplitude d'impulsion.

**11.** Procédé suivant l'une des revendications précédentes,
**caractérisé**
**en ce qu'**on module le signal de réception et en ce que, pour la détermination de la fonction d'autocorrélation du signal utile de réception, on détermine la puissance du signal utile de réception en fonction du type de modulation.

**12.** Procédé suivant l'une des revendications précédentes,
**caractérisé**
**en ce que** l'on détermine la fonction d'autocorrélation du bruit (n) de la manière suivante :

$$r_n(\tau) = \begin{cases} r_u(0) - P_v & \tau = 0 \\ r_u(\tau) & \tau \neq 0 \end{cases}$$

dans laquelle $r_n(\tau)$ désigne la fonction d'autocorrélation du bruit (n), $r_u(\tau)$ désigne la fonction d'autocorrélation du signal (u) de réception et $P_v$ désigne la puissance du signal utile de réception.

**13.** Procédé suivant l'une des revendications précédentes,
**caractérisé**
**en ce que** l'on détermine par l'équation suivante, à partir de la fonction d'autocorrélation du bruit, des coefficients pour un prédicteur de bruit en vue de la détermination des valeurs d'estimation du bruit :

$$R_n \vec{w}_n = \vec{r}_n$$

dans laquelle $\vec{r}_n$ désigne le vecteur d'autocorrélation du bruit (n), $R_n$ désigne la matrice d'autocorrélation du bruit (n) sur la base du vecteur d'autocorrélation et $\vec{w}_n$ désigne un vecteur ayant les coefficients de prédicteur de bruit.

**14.** Procédé suivant la revendication 13,
**caractérisé**
**en ce que** l'on détermine les coefficients de prédicteur de bruit par l'équation indiquée en utilisant l'algorithme inverse de Levinson Durbin.

**15.** Procédé suivant la revendication 13 ou 14,
**caractérisé**
**en ce que**, après la détermination des coefficients de prédicteur de bruit, on les règle ensuite de manière adaptative.

**16.** Procédé suivant l'une des revendications précédentes,
**caractérisé**
**en ce que** l'on traite la fonction d'autocorrélation du signal (u) de réception, avant la détermination des valeurs d'estimation du bruit, à partir de la fonction d'autocorrélation du signal (u) de réception, pour tenir compte d'une corrélation du signal (u) de réception par un signal utile contenu dans le signal (u) de réception, les valeurs d'estimation du bruit étant déterminées à partir de la fonction d'autocorrélation traitée du signal (u) de réception.

**17.** Procédé suivant la revendication 16,
**caractérisé**
**en ce que** l'on effectue le traitement de la fonction d'autocorrélation du signal (u) de réception, pour tenir compte

EP 1 533 934 B1

d'un précodage de Tomlinson-Harashima, auquel un signal (v) d'émission à la base du signal (u) de réception a été soumis.

**18.** Procédé suivant la revendication 16 ou 17,
**caractérisé**
**en ce que** l'on effectue le traitement de la fonction d'autocorrélation du signal (u) de réception, de manière à exploiter, pour la détermination des valeurs d'estimation du bruit, seulement une partie de la fonction d'autocorrélation du signal (u) de réception, qui contient sensiblement entièrement une information sur le bruit (n).

**19.** Procédé suivant la revendication 18,
**caractérisé**
**en ce que** l'on choisit la partie à exploiter de la fonction d'autocorrélation du signal (u) de réception, de manière à ce qu'elle contienne sensiblement entièrement une information d'amplitude et une information de fréquence du bruit (n).

**20.** Procédé suivant la revendication 18 ou 19,
**caractérisé**
**en ce que** la partie à exploiter de la fonction $r_u(\tau)$ du signal (u) de réception correspond à une partie de la fonction d'autocorrélation du signal (u) de réception à partir d'une valeur limite déterminée.

**21.** Procédé suivant l'une des revendications 18 à 20,
**caractérisé**
**en ce que**, lors de l'exploitation de la fonction d'autocorrélation du signal (u) de réception, on corrige un déphasage dans la fonction d'autocorrélation du signal (u) de réception, en raison de l'exploitation de seulement la partie de la fonction d'autocorrélation du signal (u) de réception.

**22.** Procédé suivant l'une des revendications 18 à 21,
**caractérisé**
**en ce que**, avant la détermination des valeurs d'estimation du bruit à partir de la partie exploitée de la fonction d'autocorrélation du signal (u) de réception, on forme encore une fois la fonction d'autocorrélation de la partie exploitée de la fonction d'autocorrélation du signal (u) de réception, pour déterminer les valeurs d'estimation du bruit sur la base de cette fonction d'autocorrélation formée encore une fois.

**23.** Procédé suivant la revendication 22,
**caractérisé**
**en ce que** l'on forme la fonction d'autocorrélation de la partie exploitée de la fonction d'autocorrélation du signal (u) de réception en effectuant une convolution de la partie exploitée de la fonction d'autocorrélation du signal (u) de réception.

**24.** Procédé suivant la revendication 22 ou 23,
**caractérisé**
**en ce que**, avant la détermination des valeurs d'estimation du bruit, on met à l'échelle la fonction d'autocorrélation de la partie exploitée de la fonction d'autocorrélation du signal (u) de réception par un facteur de mise à l'échelle.

**25.** Dispositif de prédiction du bruit contenu dans un signal de réception,
comprenant un dispositif (12) de détermination d'une fonction d'autocorrélation, pour la détermination de la fonction d'autocorrélation du signal (u) de réception, et
comprenant un dispositif (6, 12) de prédicteur de bruit, pour la détermination de valeurs d'estimation du bruit (n) contenu dans le signal (u) de réception à partir de la fonction d'autocorrélation du signal (u) de réception,
dans lequel le dispositif (12) de détermination de la fonction d'autocorrélation est tel qu'il détermine, à partir de la fonction d'autocorrélation du signal (u) de réception, la fonction d'autocorrélation du bruit (n) contenu dans le signal (u) de réception et dans lequel le dispositif (6, 12) de prédicteur de bruit est tel qu'il détermine les valeurs d'estimation du bruit à partir de la fonction d'autocorrélation du bruit (n)
**caractérisé**
**en ce que** le dispositif (12) de détermination de la fonction d'autocorrélation est tel qu'il détermine la fonction d'autocorrélation du bruit (n) en soustrayant la fonction d'autocorrélation d'un signal utile de réception, sur lequel repose le signal (u) de réception de la fonction d'autocorrélation du signal (u) de réception, et détermine ainsi la fonction d'autocorrélation du signal utile de réception de la manière suivante :

$$r_v(\tau) = \begin{cases} P_v & \tau = 0 \\ 0 & \tau \neq 0 \end{cases}$$

dans laquelle $r_v(\tau)$ désigne la fonction d'autocorrélation du signal utile de réception, pour une valeur de temps $\tau$ et $P_v$ la puissance du signal utile de réception.

26. Dispositif suivant la revendication 25,
    **caractérisé**
    **en ce que** le dispositif comprend un filtre (14) adaptatif auquel le signal (u) de réception est envoyé, le filtre (14) adaptatif étant conformé pour la production de valeurs de prédiction du signal de réception sur la base du signal (u) de réception, et dans lequel le filtre (14) adaptatif est conformé pour le réglage adaptatif de ces coefficients de filtrage en fonction d'une erreur de prédiction du filtre (14) adaptatif, et
    **en ce que** le dispositif (12) de détermination d'une autocorrélation est tel qu'il déduit la fonction d'autocorrélation du signal (u) de réception à partir des coefficients de filtrage du filtre (14) adaptatif dans le cas d'un état stable du filtre (14) adaptatif.

27. Dispositif suivant la revendication 25,
    **caractérisé**
    **en ce que** le dispositif (12) de détermination d'une fonction d'autocorrélation comprend un filtre d'autocorrélation, pour la détermination de la fonction d'autocorrélation du signal (u) de réception directement à partir du signal (u) de réception.

28. Dispositif suivant l'une des revendications 25 à 27,
    **caractérisé**
    **en ce que** le dispositif est conformé pour la mise en oeuvre du procédé suivant l'une des revendications 1 à 24.

29. Récepteur numérique pour la réception d'un signal (u) de réception transmis par un canal (2) de transmission, comprenant un dispositif suivant l'une des revendications 25 à 28 de prédiction du bruit (n) contenu dans le signal (u) de réception.

## FIG 1

## FIG 2

## FIG 3

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0211378 A1
- WO 02323566 A1
- US 5784415 A